# EUROPEAN PATENT APPLICATION

(11) **EP 2 838 225 A1**
(43) Date of publication of application: **18.02.2015**
(21) Application number: 14180727.1
(22) Date of filing: 12.08.2014
(51) Int. Cl.: H04L 12/18

(54) **Message based conversation function execution method and electronic device supporting the same**

(30) Priority: 14.08.2013 KR 20130096329
(71) Applicant: Samsung Electronics Co., Ltd, Gyeonggi-do 443-742 (KR)
(72) Inventor: Kim, Hyoungsik, 443-742 Gyeonggi-do (KR)
(74) Representative: Nederlandsch Octrooibureau

(57) **Abstract**

A message based conversation method is provided. The message based conversation method includes receiving a toon chat function execution requeast in an execution of a message application, providing a toon chat production tool, storing a cartoon cut created by the toon chat production tool, and transmitting the created cartoon cut to an electronic device corresponding to a conversation counterpart.

## Description

### TECHNICAL FIELD

The present disclosure relates to an execution of a conversation function of an electronic device. More particularly, the present disclosure relates to a message based conversation method and an electronic device supporting the same, by which it is possible to create, to use, and to share a cartoon-type animation message in a conversation.

### BACKGROUND

Portable terminal devices supporting a call functionare based on mobility and are used in an extensive number of fields due to their convenience of use, their portability,and the like. A portable terminal device may provide various input schemes for providing a user function.

In the related art, a portable terminal device may provide a touch screen including a touch panel and a display unit so that an operation which is performed to make a user select a specific image output in the display unit can be processed in a touch panel. Further, the portable terminal device may generate a touch event according to a corresponding user operation and control an application program corresponding to a user function based on this.

Recently, the use of a message service function has rapidly increaseddue to the development of communication networks. For example, users may engage in multiple conversations instantlyand simultaneously through a conversation function screen which can include both a message transmission content and a message reception content in one screen.

An emoticon supported in a current message application involves a technique which outputs a previously created image. When a user directly writes and transmits a message to be transferred to a counterpart receiver, an animation message from among the functions of the message application employs a technique by which the receiver can view a message with animation. For the emoticon, a preloaded image may be used or a new emoticon may be downloaded from the Internet, or the like, and used.

Nonetheless, it is difficult to exchange an interactive feedback with a counterpart through messages involving emoticons known in the art. In a case of an animation message, the animation message is not played until the counterpart selects an output of a corresponding message and the message is transferred with an icon type,thus limiting the interactive conversation.

Moreover, most emoticons are transmitted in a form which has been created in advance and selected by a user, and are thus insufficient for expressing an emotion which the user wants to transfer without change.

Therefore, a need exists for a message based conversation method and supporting device for creating and sharing cartoon-type animation messages.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a message based conversation method and an electronic device supporting the same, by which it is possible to create, to use, and to share a cartoon-type animation message in a conversation.

In accordance with an aspect of the present disclosure, a message based conversation method is provided. The method includes receiving a toon chat function execution request in an execution of a message application, providing a toon chat production tool, storing a cartoon cut created by the toon chat production tool, and transmitting the created cartoon cut to an electronic device corresponding to a conversation counterpart.

In accordance with another aspect of the present disclosure, a message based conversation support apparatus is provided. The apparatus includes a communication unit configured to supportan execution of a message based conversation function,a controller configured to generatea toon chat in connection with at least one transmitted and received cartoon cut among the message based conversation functions, anda storage unit configured to storethe generated toon chat.

The message based conversation method and the electronic device supporting the same according to an embodiment of the present disclosure provide a production tool which can create a cartoon-type animation message (hereinafter, optionally referred to as "toon chat") in the execution of a conversation.

While transmitting and receiving a cartoon cut, users can additionally create a cartoon cut in sequence so that the users can intuitively and interactively converse using a directly created cartoon.

In addition, metadata of each element used as a corresponding cartoon cut in a server is analyzed and a cut element which can configure a next cut may be provided to the user.

After a whole conversation is configured as a cartoon cut, the user can view previous conversation information as if the user were viewing Webtoons and can share the previous conversation information as content through a Cloud server, or the like.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram schematically illustrating a configuration of an electronic device which executes a conversation function according to an embodiment of the present disclosure;
FIG. 2 is a flowchart illustrating a conversation method according to an embodiment of the present disclosure;
FIGS. 3A and 3B illustrate a message based conversation method according to an embodiment of the present disclosure; and
FIGS. 4, 5, 6,and 7 illustrate a conversation function according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Hereinafter, configurations related to a function of the present disclosure and roles of configurations will be described in more detail. Herein, a characteristic of the present disclosure is not limited to the described various embodiments. That is, the present disclosure should be understood to include not only the various embodiments described herein, but also changes or additional functions of each configuration described.

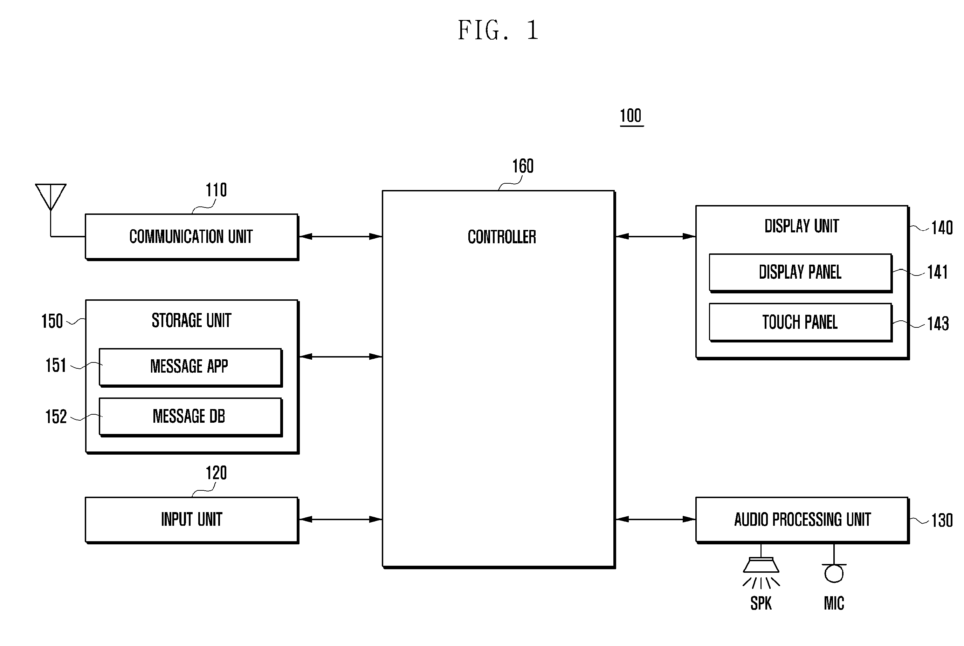

FIG. 1 is a block diagram schematically illustrating a configuration of an electronic device which executes a conversation function according to an embodiment of the present disclosure.

Referring to FIG. 1, the electronic device 100 of the present disclosure may include a communication unit 110, an input unit 120, an audio processing unit 130, a display unit 140, a storage unit 150, and a controller 160.

When cartoon cuts are collected by a message based toon chat function, the electronic device 100 of the present disclosure having an exemplary configuration sequentially arranges the cartoon cuts according to pre-configured conditions or to a user input condition, or arranges the cartoon cuts with a set type in a side of a chatting window.

In an embodiment, when a specific toon chat has been selected, the electronic device 100 may provide a quick-view screen on which a part of the cartoon cuts, included in a corresponding toon chat, is displayed in a set area or in a full view screen on which cartoon cuts included in a corresponding toon chat are displayed on a whole screen, and may allow a user to quickly and thoroughly identify toon chat conversation information. In addition, the electronic device 100 may add a new toon chat based on a selected toon chat and provide a recommendation for a cut based on the metadata of a previous toon chat.

The electronic device 100 executes to enable the identification of important information, or the like, while displaying items corresponding to a toon chat, or may allow an information display according to the set condition to be added to a corresponding display item so that a user can directly identify the contents included in the toon chat.

In an embodiment, the electronic device 100 of the present disclosure executes a function of a conversation function execution including toon chat production tool provision, generating of toon chat information, displaying of generated toon chat, management of generated toon chat, search of toon chat, or the like in the message based conversation function execution.

The communication unit 110 establishes communication channels for a voice call, a video call, and data transmission/reception of an image or a message under the control of the controller 160. Specifically, the wireless communication unit 110 establishes a voice call channel, a data communication channel, and a video call channel between mobile communication systems. Especially, the communication unit 110 of the present disclosure may support to cause a message service channel for the conversation function execution of the present disclosure to be formed. Here, the message service channel may be a service channel for transmitting/receiving various types of messages such as a short message, a multimedia message, an instant message, and the like. The message service channel may include a channel which transmits a message for the conversation function execution of the present disclosure to another electronic device and a channel which receives the message to be transmitted by another electronic device. The two channels may use different frequency channels or an identical frequency channel.

In an embodiment,the communication unit 110 may, in the execution of the conversation function, support a transmission and reception of conversation information and a toon chat, and transmit toon chat to another electronic device or receive the toon chat from another electronic device according to a user selection. Herein, the communication unit 110 may use address information of one or more other electronic devices which is indicated by the user to transmit the toon chat. The address information may be registered and managed in advance or according to a new request and user approval.

In an embodiment,the input unit 120 includes multiple input keys and function keys for receiving number and character information as input, and setting various functions. The function keys may include a direction key, a side key, and a shortcut key, which are set to execute particular functions. Further, the input unit 120 generates key signals related to the user configuration and a function control of the electronic device 100 and transmits the key signals to the controller 160.

In an embodiment, the input unit 120 may generate various input signals required for the conversation function execution of the electronic device 100. For example, the input unit 120 may generate an input signal for a selection and activation of a conversation function application which executes a message based toon chat function, an input signal for composing cartoon cuts configuring a toon chat in the execution of the conversation function, an input signal for using a production tool for the cartoon cut composition, an input signal for identifying a received toon chat, or the like. Further, the input unit 120 may generate an input signal for adding cartoon cuts to a displayed toon chat, and input signals for a division of the generated toon chat, integration, a position movement, an arrangement of toon chats, or the like. Further, the input unit 120 may generate an input signal for at least one stored toon chat search, an input signal for selecting and reading a specific toon chat, an input signal for assigning a unique IDentification (ID) to a toon chat, an input signal required to converse with a user of another electronic device based on a specific toon chat, an input signal for quickly or with a full-view screen searching toon chats, or the like.

At least one signal among the input signals as described above may be a touch event generated in the touch panel 143 of the display unit 140 which will be described below. Therefore, an input means of the present disclosure may include not only the input unit 120 with a key button type but also the touch panel 143, or the like. The input unit 120 may be implemented by a qwerty key map, a 3*4 key map, a 4*3 key map, or the like which include a plurality of keys output on the display unit 140 when a type of the display unit 140 of the electronic device 100 is formed with a touch screen.

The audio processing unit 130 includes a SPeaKer (SPK) for outputting audio data transmitted and received during a telephone call, audio data included in a received message, audio data obtained by reproducing an audio file stored in the storage unit 150, and the like, and a MICrophone (MIC) for collecting a voice of a user during a telephone call or other audio signals. The audio processing unit 130 may support, in the execution of the conversation function, a function of outputting a sound effect for alarming a conversation information or toon chat reception, a sound effect according to a toon chat selection, or the like and outputting a toonchat content as a voice according to a user configuration. The function may be omitted according to the user configuration, or the like.

The display unit 140 includes a display panel 141 and a touch panel 143. The display unit 140 may have a structure in which the touch panel 143 is disposed in front of the display panel 141.

The display unit 141 displays information input by a user or information to be provided to the user as well as various menus of the electronic device 100. That is, the display panel 141 may provide various screens, for example, an idle screen, a message composing screen, a telephony screen, or the like, according to the electronic device100. The display 141 may be formed by a Liquid Crystal Display (LCD), an Organic Light Emitted Diode (OLED), or the like. The display panel 141 may be disposed at an upper or lower portion of the touch panel.

In an embodiment, the display panel 141 of the present disclosure may output various screens according to the conversation function execution. For example, the display panel 141 may provide, in the execution of a massage based conversation function execution, a screen for creating cartoon cuts configuring a toon chat, a screen on which the composed cartoon cuts are transferred, a screen on which cartoon cuts are received, a screen on which at least one toon chat is output as a set type of a display item, a quick-view or full-view screen of toon chat, a screen on which display items corresponding to the toon chat are disposed, or the like. Further, the display panel 141 may output a screen which supports a division of the generated toon chat, a screen which supports an integration of toon chats, a screen which supports a position movement of toon chat, an arrangement screen of toon chat, or the like.

The touch panel 143 is disposed at one or more positions between upside and downside of the display panel 141, and may generate a touch event according to a touch object, e.g. a user finger contact and transmit the generated touch event to the controller 160. In this event, a sensor configuring the touch panel 143 is arranged with a matrix type and corresponding position information with respect to a touch event generated in the touch panel and information of a kind of touch events is transferred to the controller 160.

In an embodiment, the touch panel 143 may perform a touch effective area process with respect to various areas in the execution of the message based conversation function is executed and support a generation of a specific touch event based on this. Further, the touch panel 143 may generate various touch events required for the generation, the management, and the search of the toon chat under a control of the user and transfer the touch events to the controller 160. Various touch events for executing the toon chat generated by the touch panel 143 will be described in more detail with reference to following screen examples.

The storage unit 150 may store various applications for a user function execution, a key map or a menu map for a display unit 140 execution, or the like, other than an application required for a function operation according to the embodiment of the present disclosure. Herein, the key map and menu map may be respectively various types. Especially, the storage unit 150 may include a message based conversation application (i.e., a "message app") 151 for the conversation function execution and a toonchat information DataBase (DB) (i.e., a "message DB") 152 for toon chat execution of the present disclosure.

In an embodiment, the toon chat information DB 152 is configured to store various conversation information and toon chats which are generated according to the message application 151 execution. In addition, the toon chat information DB 152 may further store display item information corresponding to the toon chat information, information division or integration information, search information, or the like, of the toon chat information.

The controller 160 is supported to control a power supply of each configuration of the electronic device 100 and to perform an initialization process. Further, the controller 160 may control various signal flows for supporting the conversation function of the electronic device 100.

In an embodiment, when an input signal for performing a toon chat function has been detected, the controller 160 may determine whether a previous toon chat record exists.

For example, the controller 160 extracts another user information, a unique ID assigned in a toon chat record, address information of another electronic device, or the like, and may determine whether a previous toon chat record corresponding to this exists.

In an embodiment, the electronic device 100 is supported to store a toon chat transmitted as a default in the execution of the conversation function and may store the other user information, the unique ID assigned in a toon chat record, and the address information of the other electronic device as an index when the conversation information is stored.

In an embodiment, when a user has selected other user information, a toon chat unique ID and another terminal address information after the conversation function is activated, the controller 160 may determine whether a previous toon chat record related to the other user information, the toon chat unique ID and the other terminal address information exists. In addition, the controller 160 may perform a process for sharing the previous toon chat.

The controller 160 may provide a toon chat production tool to enable the production of the previous toon chat record and cartoon cuts in sequence. The controller 160 may output a transmitted and received toon chat subsequent to a screen on which the previous toon chat record has been output.

The controller 160 may collect metadata of the previous toon chat. For example, metadata of the toon chat may be data related to elements configuring each cartoon cut of the toon chat. The elements configuring the cartoon cut may include a character, a special effect, a speech bubble, a background screen, or the like. Furthermore, the controller 160 may extract a recommendation cut based on metadata of a collected toon chat and may transfer the extracted recommendation cut to the toon chat production tool or output the extracted recommendation cut on the display screen. The recommendation cut may be data previously mapped with the metadata by a designer or data mapped by a user's configuration.

The toon chat production tool is a tool provided to allow a user to directly create a cartoon cut configuring a toon chat and may be an application which is previously stored to select a background, a character, special effects, or the like of the cartoon cut.

The controller 160 may output a cartoon cut of a toon chat generated by the toon chat production tool on the screen. In an embodiment, the controller 160 may output a generated toon chat, i.e. a cartoon cut to the display panel 141 through the communication unit 110, control to store the generated toon chat to the storage unit 150, and transmit the generated toon chat to another electronic device corresponding to a conversation counterpart.

Hereinafter, various embodiments will be described with reference to the drawings.

While all relevant information cannot be mentioned herein due to the many possible and diverse embodiments due to the convergence trend of digital devices, the electronic device 100 may further include configurations which are not mentioned above, such as a camera, a GPS module, a vibration motor, accessories, an external device interface unit (e.g. earjack), an acceleration sensor, or the like. The accessories may be as components of the electronic device 100 which are detachable from the electronic device 100 and may include, for example, a pen for a touch on the screen of the display unit 150. Further, the electronic device 100 may exclude a specific configuration or substitute for another configuration according to a provided structure.

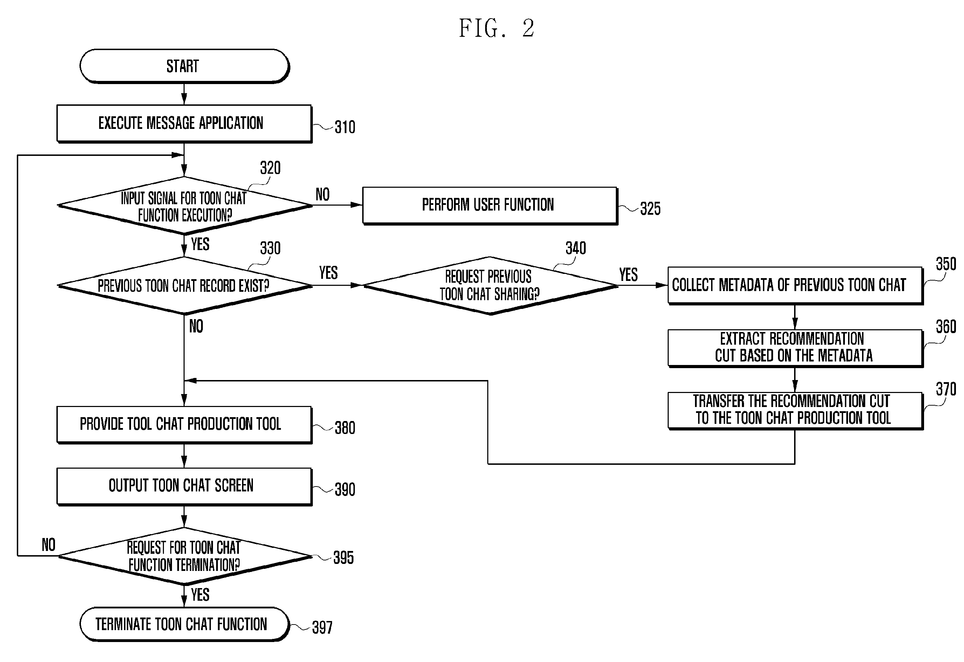

FIG. 2 is a flowchart illustrating a conversation method according to an embodiment of the present disclosure.

Referring to FIG. 2, a conversation method of the present disclosure may configure the electronic device 100 in a ready state by using a power supply supplied from a power supplier in operation 310. In an embodiment, the controller 160 may generate a power for operating each configuration of the electronic device 100 using a power supplied by the power supplier and distribute the power. Further, a message application may be executed by a user's execution request.

The controller 160 may determine whether an input signal for executing a toon chat function is generated in operation 320. In the operation, when a generated input signal is not the input signal for performing the toon chat function, the controller 160 proceeds to operation 325 and may support to perform a user function according to the input signal. For example, the controller 160 may perform a signal control required to perform a specific function, such as a conversation function, a broadcasting reception function, a file playing function, a file search function, an audio hearing function, a game function, or the like, corresponding to the input signal. In addition, a conversation function configured as a default of the message application may be performed. In general, the conversation function configured as the default may be a character text transmission and reception function, a data such as a picture, a video, or the like transmission and reception function, an emoticon display function, or the like.

In operation 320, when the input signal for performing the toon chat function has been received, the controller 160 proceeds to operation 330 and may determine whether a previous toon chat record exists.

For example, the controller 160 extracts another user's information, a unique ID assigned in a toon chat record, address information of another electronic device, or the like and can determine whether a previous toon chat record corresponding to this exists.

In an embodiment, the electronic device 100 supports to store a toon chat transmitted as a default in the execution of the conversation function and may store the other user information, the unique ID assigned in a toon chat record, the address information of the other electronic device as an index when the conversation information is stored.

Further, when a user has selected specific other user information, a toon chat unique ID and other terminal address information after the conversation function is activated, the controller 160 may determine whether a previous toon chat record related to the corresponding other user information, the toon chat unique ID and the other terminal address information exists.

In addition, in operation 340, when a sharing of the previous toon chat is required, the controller 160 may perform a process of sharing the previous toon chat. As described above, when the previous toon chat does not exist in another electronic device to be currently conversed with, the controller 160 may transmit corresponding information to another electronic device.

In operation 340, when the sharing of the previous toon chat is not required, i.e. in a state where the previous toon chat record has been already shared or when there is no separate request, the controller 160 proceeds to operation 380 and may provide a toon chat production tool so as to create a cartoon cut subsequent to the previous toon chat record. The controller 160 may support to output a transmitted and received toon chat subsequent to a screen on which the previous toon chat record has been output.

When the previous toon chat record exists and the toon chat sharing is requested, the controller 160 proceeds to operation 350 and may collect metadata of the previous toon chat. For example, the metadata of the toon chat may be data related to elements configuring each cartoon cut of the toon chat. The elements configuring the cartoon cut may include a character, a special effect, a speech bubble, a background screen, or the like.

In operation 360, the controller 160 may extract a recommendation cut based on the metadata of the collected toon chat in operation 350. The recommendation cut may be data previously mapped with the metadata by a designer or data mapped by a user's configuration.

The controller 160 may transfer the extracted recommendation cut to the toon chat production tool in operation 370.

The toon chat production tool is a tool provided to allow a user to directly create a cartoon cut configuring a toon chat and may be an application which is previously stored to select a background, a character, special effects, or the like of the cartoon cut.

In an embodiment, when there is no previous toon chat in operation 330, i.e. the toon chat function is firstly performed with another new electronic device or the toon chat function is performed based on a new conversation window with another electronic device previously registered as a conversation counterpart, the controller proceeds to operation 380 and may provide a toon chat production tool on the new conversation window.

The controller 160 may output a cartoon cut of a toon chat generated by the provided toon chat production tool on the screen in operation 390.

In an embodiment, the controller 160 may output a generated toon chat, i.e. a cartoon cut to the display panel 141 through the communication unit 110, control to store the generated toon chat to the storage unit 150, and transmit the generated toon chat to another electronic device corresponding to a conversation counterpart.

The controller 160 determines whether a toon chat function termination request is received from the user in operation 395, and when the toon chat function termination request has been received, the toon chat function can be terminated in operation 397. In this event, a general conversation function may be performed on the message application execution screen.

As described above, the conversation function execution method of the present disclosure allows a user to generate an animation message with a cartoon type, i.e. a toon chat directly using a production tool in the execution of a message application and when the toon chat is transmitted to an electronic device of a conversation counterpart, the conversation counterpart sequentially adds cartoon cuts so that an interactive and intuitive conversation can be progressed in sequence. Therefore, the user can increase an interest and concentration using the message application.

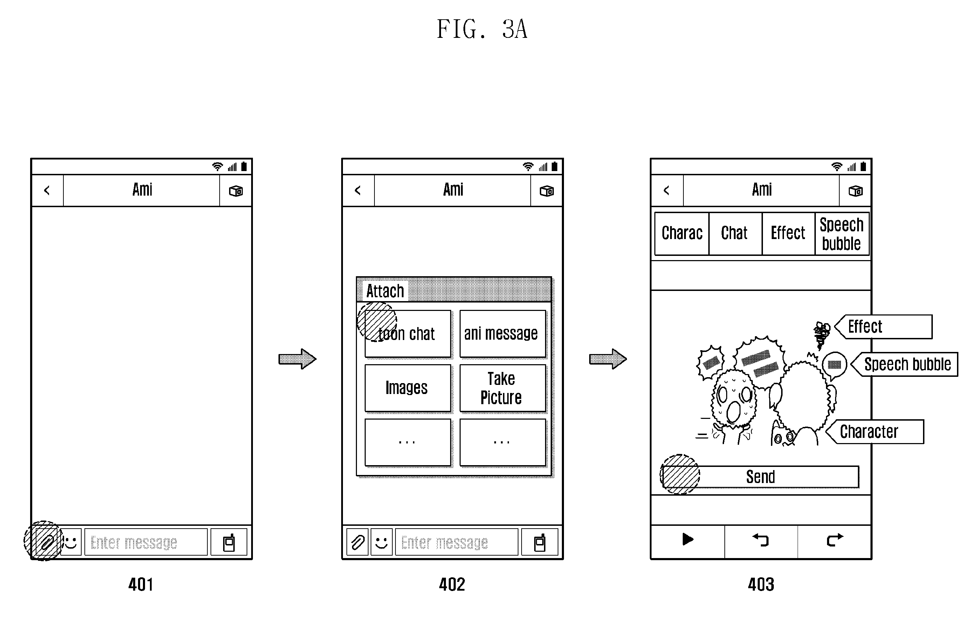

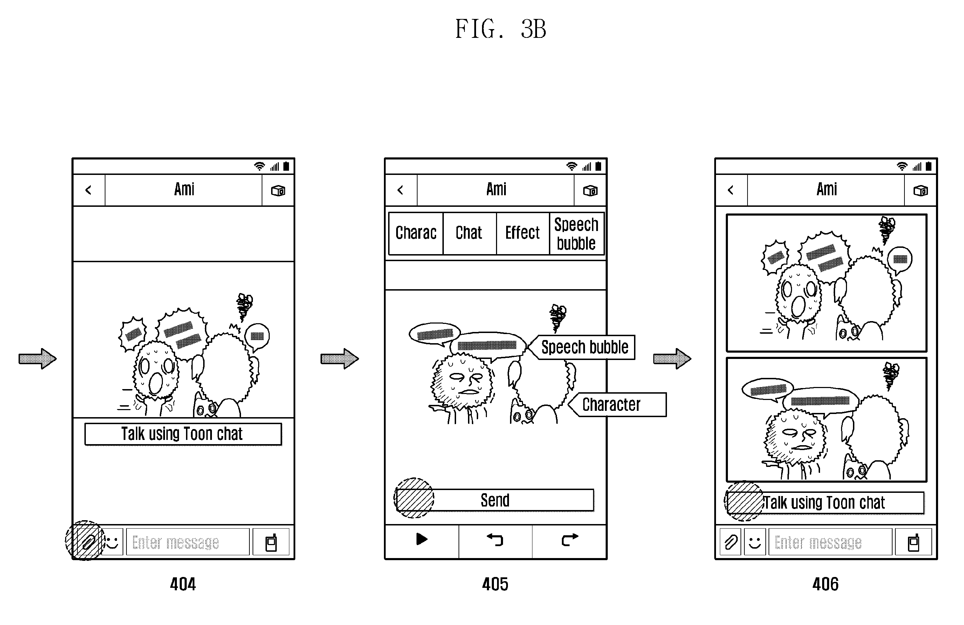

FIGS. 3A and 3B illustrate a message based conversation method according to an embodiment of the present disclosure.

Referring to FIGS. 3A and 3B, when an input signal for a message application execution is generated, a controller 160 of the electronic device may output a conversation window according to message application activation as shown in the 401 screen. Further, a user input which is input to an item output in the 401 screen is detected so that a user input for a toon chat function execution can be detected in a state where the message application is executed.

Herein, the message application may display a list for enabling of a selection of each icon corresponding to a toon chat function, an image transmission function, an emoticon transmission function, or the like on the conversation window as shown in the 402 screen.

When the toon chat function has been selected by the user among the lists as shown in the 402 screen, the controller 160 may determine whether the previous toon chat record corresponding to conversation information using the previous toon chat function exists in the storage unit 150.

When the previous toon chat has been stored in the storage unit 150, information in which the previous toon chat exists is notified to the user. Further, it is determined whether a sharing of the previous toon chat is requested by the user using a pop-up window, or the like. When the sharing has been requested, a process of sharing the previous toon chat is performed. For example, when the previous toon chat is not in another electronic device to be presently conversed with, corresponding information may be transmitted to another electronic device.

In addition, the controller 160 may provide a toon chat production tool according to the toon chat function execution as shown in the 403 screen. In this event, when the previous toon chat record is already shared or there is no separate request, the toon chat production tool is provided by controller 160 to create a new cartoon cut subsequent to a cartoon cut configuring the previous toon chat. On the contrary, when there is no previous toon chat record, the toon chat production tool is provided to create a new cartoon cut. When the user writes a cartoon cut using the toon chat production tool and then inputs a send key, a toon chat including the written cartoon cut is transmitted to the electronic device of the conversation counterpart.

Atoon chat is transmitted to the electronic device of the conversation counterpart as shown in the404 screen and an option, which makes the conversation counterpart select whether the toon chat can be consecutively created in a screen where the toon chat is transmitted, may be displayed. Herein, when the conversation counterpart has selected an execution of consecutively creating the toon chat, an electronic device of the conversation counterpart also provides a toon chat production tool as shown in the 405 screen. In this event, a cartoon cut configuring the received toon chat may hide a display and a new cartoon cut to be created by the conversation counterpart may be displayed. When the conversation counterpart creates the cartoon cut and then inputs a send key, the hidden cartoon cut and the new generated cartoon cut may be transmitted together as shown in the 406 screen. Meanwhile, when a toon chat configuration increases according to an addition of a cartoon cut, a scroll function may be automatically generated in the screen.

In an embodiment, the present disclosure may execute the transmitted and received toon chat to be output subsequent to the screen where the previous toon chat record is output. In addition, a plurality of conversation counterparts may create a cartoon cut subsequent to a result of a previous user who creates a cartoon cut so that a relay mode can be implemented.

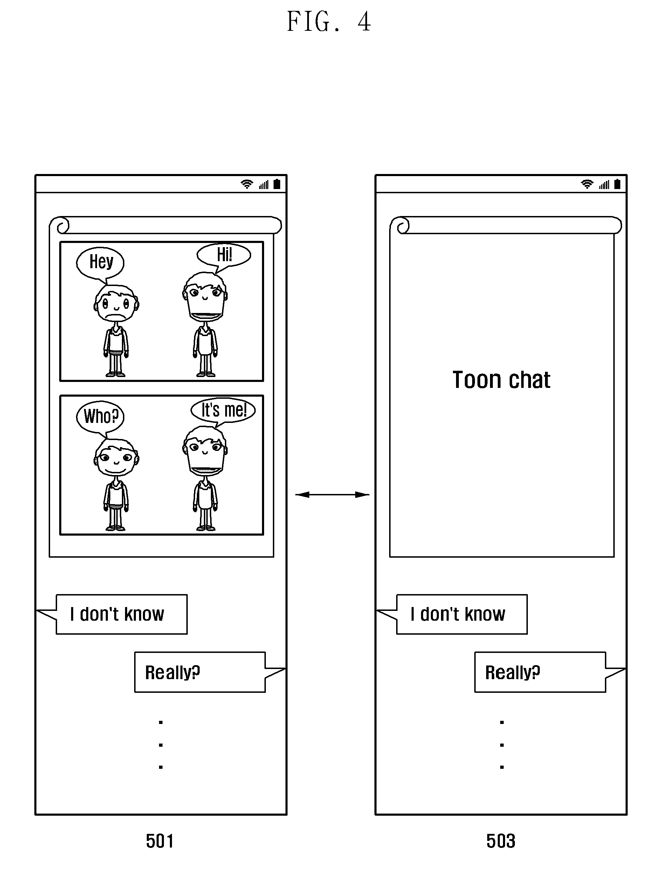

FIGS. 4 to 7 illustrate of a conversation function according to an embodiment of the present disclosure.

Referring to FIG. 4, when an input signal for executing a toon chat function by a user is generated on the execution screen of message based conversation function application of the present disclosure, as shown in the 503 screen,an electronic device 100 can output a toon chat screen as shown in the 501 screen. Further, not only a toon chat screen but also a general text based speech bubble may be output.

For example, when there are two conversation participants, characters corresponding to each of two conversation participants may appear in a cartoon cut.

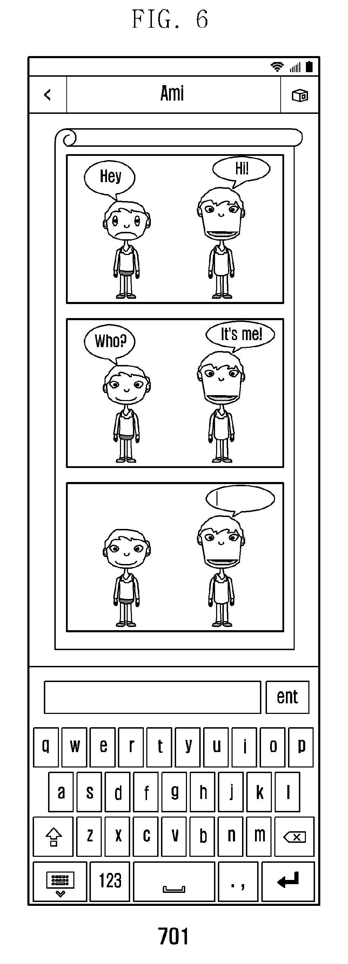

Referring to FIG. 6, when conversation contents have been input by a keyboard input, the input conversation contents may be displayed in a speech bubble of a corresponding character as shown in the 701 screen.

In an embodiment, the toon chat screen may be separated, for example, in each toon chat corresponding to a previously assigned unique ID and be displayed. In addition, at least one toon chat screen may be output with an item type which displays only the unique ID instead of information included on the inside as shown in the 503 screen. When the unique ID has been selected and executed, actual cartoon cuts configuring the toon chat may be output.

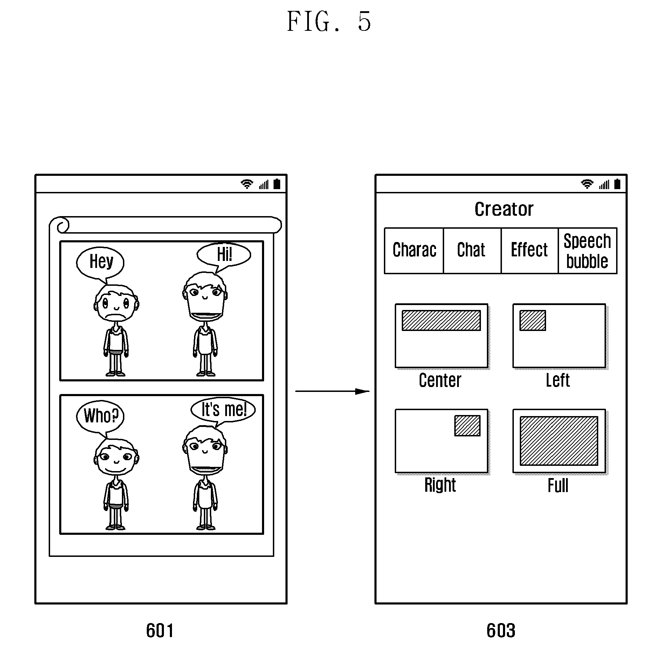

Referring to FIG. 5, the figure illustrates an execution example of a toon chat production tool as shown in the 603 screen. A toon chat production tool may be provided according to an execution of the toon chat function as shown in the 601 screen. A user can use a character for configuring a cartoon cut, a special effect, a speech bubble function, or the like through the toon chat production tool. When there is the previous toon chat record, a cartoon cut configuring the previous toon chat and the toon chat production tool may be displayed together in the screen.

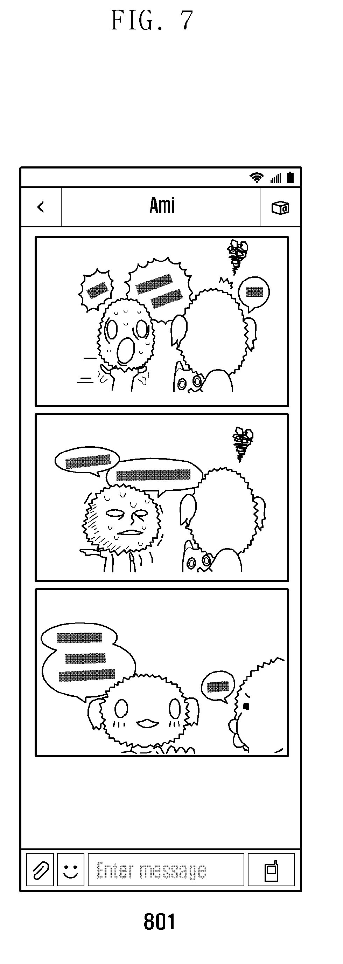

Referring to FIG. 7, the figure illustrates an example of a toon chat in the 801 screen where a whole conversation is configured as a cartoon cut by a message application execution. The toon chat may be stored in the storage unit and a unique ID may be assigned. A user can view previous conversation information as if the user were viewing the Webtoons later through a stored toon chat replay. Further, there is an advantage in that the toon chat is shared as one content through a Cloud server, or the like.

As described above, a conversation function execution method according to an embodiment of the present disclosure may provide a production tool to create a cartoon type of animation message (hereinafter, referred to as "toon chat"). While transmitting and receiving a cartoon cut, users can additionally create a cartoon cut in sequence so that the user can intuitively and interactively converse using a directly created cartoon.

In addition, metadata of each element used to a corresponding cartoon cut in a server is analyzed and a cut element, which can configure a next cut, may be recommended to the user.

A whole conversation is configured as a cartoon cut by the toon chat execution so that the whole conversation can be generated as one content which can be stored and shared.

In embodiments, the electronic device 100 may include configurations which are not described above, such as a near field communication module for a near field communication, an interface for transmitting and receiving data by a wired communication scheme or a wireless communication scheme of the terminal 100, an internet communication module which performs an internet function by communicating with an internet network, a digital broadcasting module which performs a digital broadcasting reception or replaying function, or the like. These components may be variously modified according to the convergence trend of digital devices, and cannot be all enumerated. However, the electronic device 100 may further include elements equivalent to the above-described elements. Also, it goes without saying that, in the electronic device 100, particular components may be excluded from the above-described configuration or may be replaced with other components according to a provision form thereof. A person ordinarily skilled in the art will easily understand this.

Further, the electronic device 100 according to an embodiment of the present disclosure may include all types of devices which can provide basic pages of a level identical to a menu page. Examples of the electronic device 100 may include all types of information communication devices, all types of multimedia devices, and application devices for all types of the information communication devices and all types of the multimedia devices, such as all mobile communication terminals operating based on communication protocols matched to various communication systems, a Portable Multimedia Player (PMP), a digital broadcast player, a Personal Digital Assistant (PDA), a music player (e.g., an MP3 player), a portable game console, a smart phone, a laptop computer, a handheld PC, and the like.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and detailsmay be made therein without departing from the spirit and scope of the present disclosure as defined by the appended claims and their equivalents.

## Claims

1. A message based conversation method, the method comprising:
receiving a toon chat function execution request in an execution of a message application;
providing a toon chat production tool;
storing a cartoon cut created by the toon chat production tool; and
transmitting the created cartoon cut to an electronic device corresponding to a conversation counterpart.

2. The message based conversation method of claim 1, further comprising:
after the receiving of the toon chat function execution request, determining whether a previously stored toon chat record exists;
determining whether a previous toon chat will be shared when the previous toon chat record exists;
extracting a cartoon cut based on the previous toon chat in a case of sharing; and
displaying the extracted cartoon cut and transmitting the extracted cartoon cut to the electronic device corresponding to the conversation counterpart.

3. The message based conversation method of claim 2, further comprising sequentially displaying the cartoon cut created by the toon chat production tool subsequent to the previous toon chat.

4. The message based conversation method of claim 1, further comprising:
after the receiving of the toon chat function execution request, determining whether the previously stored toon chat record exists;
collecting metadata of the previous toon chat when the previous toon chat exists;
extracting a recommendation cut on the basis of the metadata; and
transmitting the extracted recommendation cut to the toon chat production tool.

5. The method of claim 4, wherein the metadata includes at leastone of a character, a special effect, a speech bubble, and a background screen.

6. The message based conversation method of claim 1, further comprising:
receiving a new cartoon cut from the electronic device corresponding to the conversation counterpart;
receiving the toon chat function request corresponding to the received cartoon cut; and
storing and displaying the cartoon cut created by the toon chat production tool in connection with the received cartoon cut.

7. The message based conversation method of claim 1, wherein the providing of the toon chat production tool comprises providing an option which enables a selection of at least one of a character based on the cartoon cut, a special effect, a speech bubble and a basckground screen which are executed to the cartoon cut.

8. The message based conversation method of claim 1, wherein the storing of the created cartoon cut comprises assigning a unique ID to the at least one cartoon cut and storing the cartoon cut as a toon chat.

9. A message based conversation support apparatus, the apparatus comprising:
a communication unit configured to support an execution of a message based conversation function;
a controller configured to generate a toon chat in connection with at least one transmitted and received cartoon cut using message based conversation functions; and
a storage unit configured to store the generated toon chat.

10. The message based conversation support apparatus of claim 9, further comprising a display unit configured to display an icon type of a display item which indicates the toon chat.

11. The message based conversation support apparatus of claim 9, wherein the controller provides a toon chat production tool when a toon chat function execution request has been received during an execution of the message based conversation function.

12. The message based conversation support apparatus of claim 11, wherein the toon chat production tool provides an option which enables a selection of at least one of a character based on the cartoon cut, a special effect, a speech bubble and a background screen which are executed to the cartoon cut.

13. The message based conversation support apparatus of claim 11, wherein the controller determines whether a previously stored toon chat record exists, determines whether the previous toon chat will be shared when the previously stored toon chat record exists, extracts a cartoon cut based on the previous toon chat and outputs and transmits the cartoon cut in the case of sharing.

14. The message based conversation support apparatus of claim 13, wherein the controller sequentially configures the at least one transmitted and received cartoon cut subsequent to the previous toon chat.

15. The message based conversation support apparatus of claim 13, wherein the controller collects metadata of the previous toon chat, extracts a recommandation cut on the basis of the metadata, and transmits the extracted recommandation cut to the toon chat production tool.
